# EUROPÄISCHE PATENTSCHRIFT

(11) **EP 0 775 513 B1**
(45) Veröffentlichungstag und Bekanntmachung des Hinweises auf die Patenterteilung: **29.01.2003**
(21) Anmeldenummer: 96117810.0
(22) Anmeldetag: 07.11.1996
(51) Int. Cl.: B01D 35/18, B01D 29/21

(54) **Flüssigkeitsfilter mit einem Stapelscheiben-Wärmetauscher**
Liquid filter with disk stack heat exchanger
Filtre de liquide avec un échangeur de chaleur d'un empilage de disques

(30) Priorität: 27.11.1995 DE 19544088
(43) Veröffentlichungstag der Anmeldung: 28.05.1997
(73) Patentinhaber: MAHLE Filtersysteme GmbH, 70376 Stuttgart (DE)
(72) Erfinder: Brieden, Thomas, 71336 Waiblingen (DE); Gebert, Hans, 74080 Heilbronn (DE); Müller, Hubert, 70327 Stuttgart (DE)
(74) Vertreter: Patentanwalts-Partnerschaft, Rotermund + Pfusch + Bernhard

(56) Entgegenhaltungen:
- EP-A- 0 551 545
- EP-A- 0 631 804
- US-A- 4 831 980

## Beschreibung

Die Erfindung betrifft ein Flüssigkeitsfilter mit einem Stapelscheiben-Wärmetauscher nach dem Oberbegriff des Patentanspruchs 1.

Eine solche Einrichtung ist aus EP-A-0 631 804 bekannt.

Aus EP-A-0 551 545 ist ein mit einem ansetzbaren Filtergehäuse verbindbarer Stapelscheiben-Wärmetauscher mit folgenden Merkmalen bekannt:
- der Wärmetauscher besteht aus mit axialem Abstand aufeinander gelegten, radial dichte Ringräume bildenden Ringscheiben, deren aneinander grenzende Ringräume jeweils abwechselnd mit einer der beiden Flüssigkeiten beaufschlagt sind, wozu die beiden Flüssigkeiten jeweils an einem axialen Ende zu- und an einem anderen Ende abgeführt werden,
- die Ringscheiben liegen radial außen und innen axial über angeformte Ringkragen gehäuselos dicht aneinander.

Von diesem Stand der Technik ausgehend beschäftigt sich die Erfindung bei einem gattungsgemäßen Flüssigkeitsfilter mit dem Problem, eine möglichst rationell herstellbare, kurz bauende Filterausführung zu schaffen.

Gelöst wird dieses Problem durch eine Ausführung nach den kennzeichnenden Merkmalen des Patentanspruchs 1. Dabei kommt mit Bezug auf die erfinderische Lösung in dem letzten kennzeichnenden Teilmerkmal eine besondere Bedeutung der Ausführung zu, nach der die dort spezifizierten Kanäle ausschließlich radial außerhalb des mit zu filternder Flüssigkeit beaufschlagbaren Innenraumes des Filtergehäuses verlaufen.

Ohne das vorstehend herausgestellte Teilmerkmal würde sich bei einer Kombination der Lehren aus den eingangs zum Stand der Technik genannten Dokumenten EP-A-0 631 804 und EP-A-0 551 545 ein gegenüber der erfindungsgemäßen Ausführung größerer, zwischen der dem Filtergehäuse benachbarten Stapelscheibe des Wärmetauschers und der zugeordneten Trennwand des Filtergehäuses liegender Abstand ergeben, weshalb bei einer solchen Kombination die erfindungsgemäß angestrebte kurz bauende Filterausführung in dieser Form nicht möglich wäre.

Ein besonderer Vorteil der erfindungsgemäßen Ausführung besteht unter anderem darin, das Wärmeträgermedium jeweils in Achsrichtung des Filters aus dem Wärmetauscher heraus bzw. in diesen hinein zu führen. Dies ermöglicht es wiederum, die an dem Filtergehäuse zugeordneten Zu- und Abführkanäle radial außen an dem Filtergehäuse vorzusehen, in einem Bereich, der radial außerhalb des Filtergehäuseinnenraumes liegt.

Zweckmäßige Ausgestaltungen der Erfindung sind Gegenstand der Unteransprüche. Ein Ausführungsbeispiel ist in der Zeichnung dargestellt.

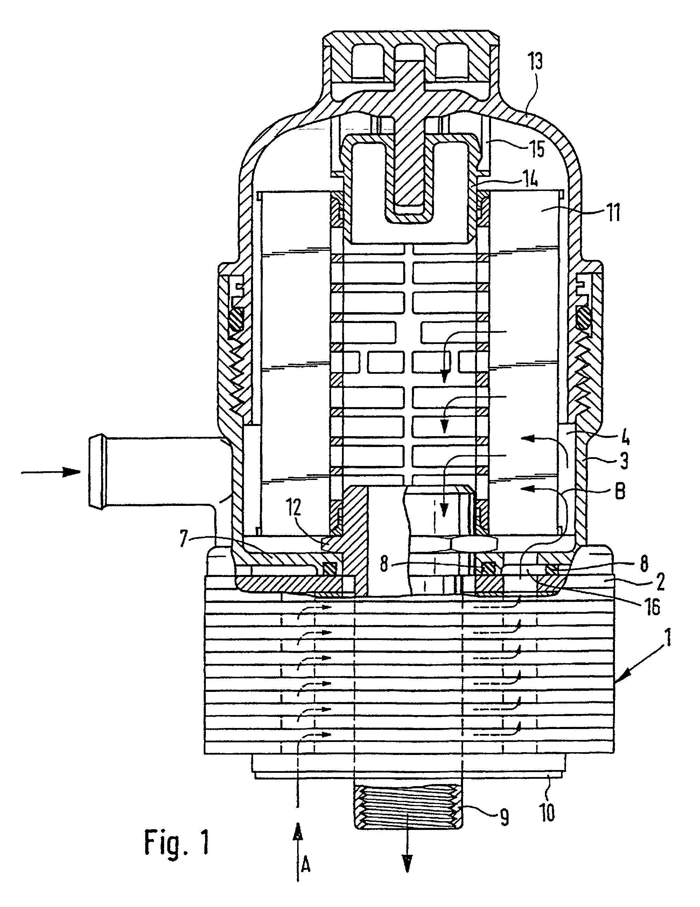

Es zeigen
- Fig. 1: einen Längsschnitt durch einen Flüssigkeitsfilter mit integriertem Wärmetauscher,

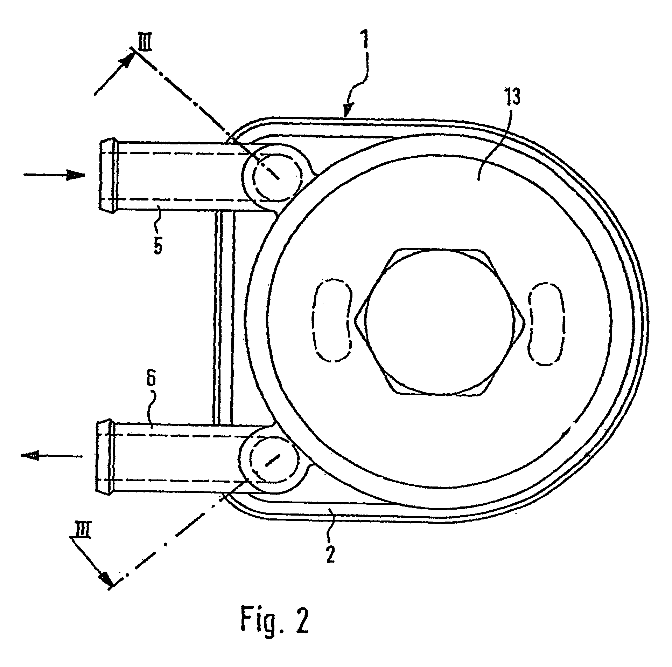

- Fig. 2: eine Draufsicht auf den Flüssigkeitsfilter,

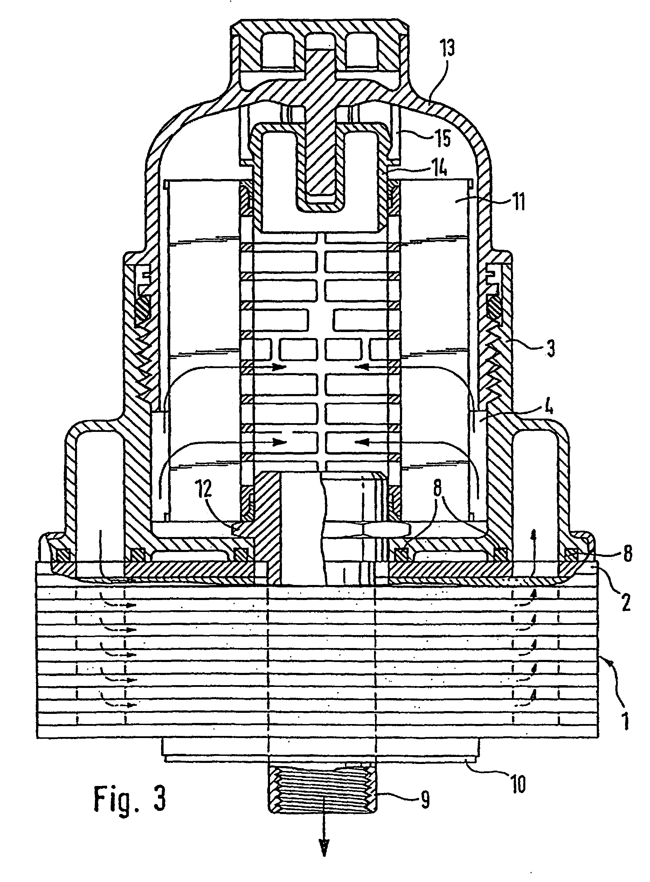

- Fig. 3: einen Schnitt durch den Flüssigkeitsfilter mit integriertem Wärmetauscher nach Linie III-III in Fig. 2.

Ein Stapelscheiben-Wärmetauscher 1 ist an einem seiner beiden Enden über eine verstärkte letzte Stapelscheibe 2 formschlüssig fest mit dem Gehäuse 3 eines Flüssigkeitsfilters verbunden. Der Formschluß in dem dargestellten Beispiel ist über eine Bördelverbindung gegeben, wobei die letzte Stapelscheibe 2 um einen Ringbund des Gehäuses 3 gebördelt ist.

Der Stapelscheiben-Wärmetauscher 1 ist aus einer Vielzahl einzelner aneinanderliegender Ringscheiben aufgebaut, die jeweils radial innen und außen vorzugsweise in gleicher Richtung angeformte rechtwinklig abstehende Kragen besitzen. Mit diesen Kragen überlappen sich die einzelnen aneinandergereihten Stapelscheiben und werden dort beispielsweise dicht miteinander verlötet, um auf diese Weise einen praktisch gehäuselosen Wärmetauscher zu erhalten. Gehäuselos bedeutet hier, daß die angeformten Kragen der Stapelscheiben die radialen Außenwände bilden und axial der Abschluß jeweils über die letzte Stapelscheibe gegeben ist. Zwischen den Stapelscheiben befindet sich jeweils ein Ringraum. Jeweils übernächste aneinandergrenzende Ringräume werden von einerseits der Wärmeträger-Flüssigkeit und andererseits von der zu filternden Flüssigkeit durchströmt. Hierzu sind die einzelnen Ringräume über entsprechende axiale Öffnungen miteinander verbunden. Der Aufbau derartiger Stapelscheiben-Wärmetauscher ist an sich bekannt.

Im vorliegenden Beispiel strömt nach Angabe des Pfeiles A zu kühlendes Motoröl von unten in den Wärmetauscher 1 und verläßt diesen in Richtung des Rohraumes 4 des Filtergehäuses 1 entsprechend der Pfeilangabe B.

Die Zu- und Abführung der Wärmeträger-Flüssigkeit, die hier Wasser ist, erfolgt über einen Zulaufstutzen 5 bzw. einen Ablaufstutzen 6. Die beiden Stutzen 5 und 6 sind in das Gehäuse 3 des Flüssigkeitsfilters integriert, was auch für die Zuleitungen zu den Durchströmungskanälen in dem Wärmetauscher gilt.

Die Zu- und Ableitungskanäle zwischen dem Boden 7 des Gehäuses 3 und der letzten angrenzenden Stapelscheibe 2 des Wärmetauschers 1 werden durch Dichtungen erzielt, wobei diese Dichtungen zu einer Formdichtung 8 zusammengefaßt sein können.

Auf einem nicht dargestellten Filterkopf wird das Gehäuse 3 mit dem daran integrierten Wärmetauscher 1 über einen Rohrstutzen 9 befestigt, der vom Inneren des Gehäuses 3 aus das Zentrum des Wärmetauschers 1 durchdringt. An dem freien Ende des Rohrstutzens 9 befindet sich ein Innen- oder Außengewinde zum Aufschrauben auf einen Filterkopf. Durch den Rohrstutzen 9 fließt die in dem Filter gereinigte Flüssigkeit den angegebenen Pfeilen entsprechend ab. Um bei einem auf einen Filterkopf aufgeschraubten Filter die zu filternde Flüssigkeit in den Wärmetauscher 1 einführen zu können, besitzt der Wärmetauscher an der Anschraubfläche eine Ringdichtung 10, die dicht auf eine Anlagefläche des Filterkopfes aufgespannt wird. In dem Ringraum zwischen der Ringdichtung 10 und dem Rohrstutzen 9 kann dann die aus dem Filterkopf in diesen Bereich austretende Flüssigkeit gemäß dem Pfeil A in den Wärmetauscher 1 eintreten. Durch den Kanal 16 verläßt die zu reinigende Flüssigkeit den Wärmetauscher 1, um in den Rohraum 4 des Filter-Gehäuses 3 zu gelangen.

Die Reinigung der zu filternden Flüssigkeit erfolgt in einem von radial außen nach innen durchströmten Ringfiltereinsatz 11.

Der Rohrstutzen 9 liegt innerhalb des Gehäuses 3 an dessen Boden 7 über einen Kragen 12 an, wobei dieser Kragen auf seinem Außenumfang als Sechskant ausgebildet ist. Dadurch kann dort bei offenem Gehäuse 3 ein Montageschlüssel zum Aufschrauben des Rohrstutzens 9 auf den Filterkopf angesetzt werden.

An seinem in das Innere des Gehäuses 3 ragenden Ende ist der Rohrstutzen 9 mit einer zylindrischen Außenfläche versehen, um hierauf den Ringfiltereinsatz 11 dicht aufschieben zu können. Die Dichtung zwischen dem aufgeschobenen Ringfiltereinsatz 11 und dem Rohrstutzen 9 erfolgt radial.

Verschlossen ist das Filtergehäuse über einen aufschraubbaren Deckel 13. Innen ist dieser Deckel an seinem inneren Zenit mit einer zylindrischen Kappe 14 ausgerüstet, auf die der Ringfiltereinsatz 11 radial dicht aufschiebbar ist.

Die Kappe 14 ist in an dem Deckel 13 angeformten elastischen Stegen 15 eingeschnappt und drehbar.

Bei Motorenölfiltern mit einem auswechselbaren Ringfiltereinsatz 11 und einem abnehmbaren Filtergehäusedeckel ist häufig ein sogenanntes Leerlaufventil vorgesehen. Ein solches Ventil kann automatisch beim Abnehmen des Gehäusedekkels öffnen. In einem solchen Fall zweigt beispielsweise von dem reinseitigen Ablaufkanal ein Zusatz-Leerlaufkanal ab. Dessen Öffnung ist bei geschlossenem Filtergehäuse durch das Ende eines drehbar, axial fixiert an dem Gehäusedeckel angebrachten, den Ringfiltereinsatz 11 axial durchgreifenden Stabes verschließbar. Beim Öffnen des Gehäusedeckels gibt das Ende des Stabes die Leerlauföffnung frei. Ausführungen dieser Art sind ausführlich in DE 44 46 263 A1 und der deutschen Patentanmeldung 196 23 681.9 beschrieben. Eine solche Leerlaufeinrichtung ist auch bei der hier gezeichneten und beschriebenen erfindungsgemäßen Filter-Wärmetauscher-Kombinations-Ausführung analog realisierbar. Der in die Leerlauföffnung greifende, an dem Gehäusedeckel angebrachte Stab würde hier den Wärmetauscher 1 zental durchgreifen.

## Patentansprüche

1. Flüssigkeitsfilter mit einem Stapelscheibenwärmetauscher für eine durchzuführende Flüssigkeit, insbesondere Motoröl, und eine Wärmeträger-Flüssigkeit, bei dem
- das Filter einen zum Austauschen eines Ringfiltereinsatzes axial gegenüber einem Filter-Gehäuse (3) zu öffnenden Deckel (13) besitzt,
- das Filter-Gehäuse (3) an seinem dem abnehmbaren Deckel (13) axial gegenüberliegenden Ende eine zentrale Öffnung besitzt,
- die zentrale Öffnung des Filter-Gehäuses (3) ein an dem Boden (7) des Filter-Gehäuses (3) zum Verspannen des Wärmetauschers (1) gegen einen Filterkopf sich abstützender, aus dem freien Ende des Wärmetauschers herausragender Rohrstutzen (9) durchdringt,
- ein zwischen dem Gehäuse (3) des Filters und dem Wärmetauscher (1) gedichteter Kanal (16) den die zu filternde Flüssigkeit führenden Teil des Wärmetauschers (1) mit dem radial außerhalb eines Ringfiltereinsatzes (11) liegenden Rohraum (4) des Filter-Gehäuses (3) verbindet,
**gekennzeichnet durch die Merkmale**
- der Wärmetauscher (1) besteht aus mit axialem Abstand aufeinandergelegten radial dichte Ringräume bildenden Ringscheiben, deren aneinandergrenzende Ringräume jeweils abwechselnd mit einer der beiden Flüssigkeiten beaufschlagt sind, wozu die beiden Flüssigkeiten jeweils an den gegenüberliegenden axialen Enden des Wärmetauschers (1) zu- und abgeführt werden,
- die Ringscheiben liegen radial außen und innen axial über angeformte Ringkragen gehäuselos dicht aneinander,
- der Wärmetauscher (1) liegt an einem seiner axialen Enden an dem Gehäuse (3) des Flüssigkeitsfilters an und ist dort fest mit diesem verbunden,
- das Filter-Gehäuse (3) besitzt einen Zu- und einen Ablaufstutzen (5) bzw. (6) für die Wärmeträger-Flüssigkeit, die über zwischen dem Wärmetauscher (1) und dem Filter-Gehäuse (3) gedichtete Kanäle dem Wärmetauscher (1) zu- und aus diesem abgeführt werden, wobei diese Kanäle ausschließlich radial außerhalb des Rohraums (4) verlaufen.

2. Flüssigkeitsfilter nach Anspruch 1,
**gekennzeichnet durch die Merkmale**
- auf das in das Filtergehäuse (3) ragende Ende des Stutzens (9) ist der ringförmige Filtereinsatz (11) mit einem ersten seiner beiden Enden aufsteckbar,
- mit dem zweiten Ende ist der Ringfiltereinsatz (11) auf einen von dem Deckel (13) ausgehenden, das Zentrum des Ringfiltereinsatzes (11) dicht verschließenden, Ansatz (14) aufsteckbar.

3. Flüssigkeitsfilter nach Anspruch 1 oder 2,
**dadurch gekennzeichnet,**
**daß** in das Filter-Gehäuse (3) ragende Ende des Rohrstutzens (9) mit einer Angriffsfläche für ein verdrehfest aufsetzbares Montagewerkzeug versehen ist.

4. Flüssigkeitsfilter nach einem der vorhergehenden Ansprüche,
**dadurch gekennzeichnet,**
**daß** der Wärmetauscher (1) an seiner an das Filter-Gehäuse (3) angrenzenden Seite zentral innen über eine Dichtung (8) gegenüber dem Filter-Gehäuse (3) gedichtet ist.

5. Flüssigkeitsfilter nach einem der vorhergehenden Ansprüche,
**dadurch gekennzeichnet,**
**daß** die feste Verbindung zwischen dem Filter-Gehäuse (3) und dem Wärmetauscher (1) eine Bördelverbindung ist.

## Claims

1. Liquid filter with a stacked plate heat exchanger for a permeating liquid, in particular engine oil, and a heat-carrying liquid, in which
- the filter possesses a lid (13) to be opened axially relative to a filter housing (3), for exchanging an annular filter insert,
- the filter housing (3) possesses a central orifice at its end axially remote from the removable lid (13),
- the central orifice of the filter housing (3) penetrates a pipe fitting (9) projecting from the free end of the heat exchanger and resting on the bottom (7) of the filter housing (3) for fixing the heat exchanger (1) against a filter head,
- a duct (16) sealed between the housing (3) of the filter and the heat exchanger (1) connects the part of the heat exchanger (1) carrying the liquid to be filtered to the untreated material chamber (4) of the filter housing (3), located radially outside an annular filter insert (11),
**characterised by** the features
- the heat exchanger (1) consists of annular plates which are stacked with axial spacing, form radially sealed annular chambers and of which the adjoining annular chambers are each loaded alternately with one of the two liquids, for which purpose the two respective liquids are supplied and discharged at the opposing axial ends of the heat exchanger (1),
- the annular plates are stacked tightly radially externally and internally axially via integral annular bands, without a housing,
- the heat exchanger (1) rests with one of its axial ends on the housing (3) of the liquid filter and is rigidly connected thereto,
- the filter housing (3) possesses a feed and discharge nozzle (5) and (6) for the heat-carrying liquid which is supplied to and discharged from the heat exchanger (1) via sealed ducts between the heat exchanger (1) and the filter housing (3), these ducts extending only radially outside the untreated material chamber (4).

2. Liquid filter according to claim 1, **characterised by** the features
- the annular filter insert (11) may be placed, with the first of its two ends, onto the end of the fitting (9) projecting into the filter housing (3),
- the annular filter insert (11) may be placed with its second end onto an attachment (14) which issues from the lid (13) and tightly seals the centre of the annular filter insert (11).

3. Liquid filter according to claim 1 or 2, **characterised in that** the end of the pipe fitting (9) projecting into the filter housing (3) is provided with a working surface for a fitting tool which may be non-rotatably applied.

4. Liquid filter according to any of the preceding claims, **characterised in that** the heat exchanger (1) is sealed from the filter housing (3) centrally internally via a seal (8) on its side adjoining the filter housing (3).

5. Liquid filter according to any of the preceding claims, **characterised in that** the rigid connection between the filter housing (3) and the heat exchanger (1) is a crimped connection.

## Revendications

1. Filtre à liquide comportant un échangeur de chaleur à disques empilés pour un liquide à faire traverser, en particulier de l'huile de moteur, et un liquide caloporteur, dans lequel
- le filtre possède un couvercle (13) à ouvrir axialement par rapport à un carter de filtre (3) pour remplacer une cartouche filtrante annulaire,
- le carter de filtre (3) possède à son extrémité opposée axialement au couvercle démontable (13) une ouverture centrale,
- une tubulure (9) faisant saillie hors de l'extrémité libre de l'échangeur de chaleur, prenant appui sur le fond (7) du carter de filtre (3) pour serrer l'échangeur de chaleur contre une tête de filtre, traverse l'ouverture centrale du carter de filtre (3),
- un canal (16) étanchéifié entre le carter (3) du filtre et l'échangeur de chaleur (1) relie la partie de l'échangeur de chaleur (1) acheminant le liquide à filtrer à l'espace brut (4) du carter de filtre (3) situé radialement à l'extérieur d'une cartouche filtrante annulaire (11),
**caractérisé par les particularités suivantes**
- l'échangeur de chaleur (1) est constitué de disques annulaires superposés à distance axiale, formant des espaces annulaires étanches radialement, dont les espaces annulaires adjacents les uns aux autres sont alternativement alimentés en l'un des deux liquides, ce pour quoi les deux liquides sont respectivement acheminés et évacués aux extrémités axiales se faisant face de l'échangeur de chaleur (1),
- les disques annulaires s'appuient de manière étanche les uns contre les autres radialement à l'extérieur et à l'intérieur axialement, sans carter, par l'intermédiaire de collerettes annulaires qui y sont formées,
- l'échangeur de chaleur (1) s'appuie à l'une de ses extrémités axiales sur le carter (3) du filtre à liquide et y est assemblé de manière fixe avec celui-ci,
- le carter de filtre (3) possède une tubulure d'alimentation (5) et une tubulure d'évacuation (6) pour le liquide caloporteur, qui par l'intermédiaire de canaux étanchéifiés entre l'échangeur de chaleur (1) et le carter de filtre (3) est amené dans l'échangeur de chaleur (1) et évacué hors de celui-ci, ces canaux s'étendant exclusivement radialement à l'extérieur de l'espace brut (4).

2. Filtre à liquide selon la revendication 1,
**caractérisé par les particularités suivantes**
- la cartouche filtrante annulaire (11) est emboîtable par l'une de ses deux extrémités sur l'extrémité de la tubulure (9) faisant saillie dans le carter de filtre (3),
- par sa deuxième extrémité la cartouche filtrante annulaire (11) peut être emboîtée sur une embase (14) partant du couvercle (13), obturant de manière étanche le centre de la cartouche filtrante annulaire (11).

3. Filtre à liquide selon la revendication 1 ou 2,
**caractérisé en ce**
**que** l'extrémité de la tubulure (9) faisant saillie dans le carter de filtre (3) est pourvue d'une surface de prise pour un outil de montage démontable, fixe en rotation.

4. Filtre à liquide selon l'une des revendications précédentes,
**caractérisé en ce**
**que** l'échangeur de chaleur (1) est étanchéifié par rapport au carter de filtre (3) sur son côté adjacent au carter de filtre, de manière centrale à l'intérieur par l'intermédiaire d'un joint (8).

5. Filtre à liquide selon l'une des revendications précédentes,
**caractérisé en ce**
**que** l'assemblage fixe entre le carter de filtre (3) et l'échangeur de chaleur (1) est un assemblage serti.
